# EUROPÄISCHE PATENTSCHRIFT

(11) **EP 1 917 746 B1**
(45) Veröffentlichungstag und Bekanntmachung des Hinweises auf die Patenterteilung: **27.05.2009**
(21) Anmeldenummer: 06778162.5
(22) Anmeldetag: 03.08.2006
(51) Int. Cl.: H04J 3/16

(54) **VERFAHREN ZUR ÜBERTRAGUNG VON DATEN UND NETZWERKELEMENT FÜR EIN DATENNETZ**
METHOD FOR TRANSMITTING DATA AND NETWORK ELEMENT FOR A DATA NETWORK
PROCEDE POUR TRANSMETTRE DES DONNEES ET ELEMENT DE RESEAU POUR RESEAU DE DONNEES

(30) Priorität: 09.08.2005 DE 102005037580
(43) Veröffentlichungstag der Anmeldung: 07.05.2008
(73) Patentinhaber: Nokia Siemens Networks GmbH & Co. KG, 81541 München (DE)
(72) Erfinder: GIERBAUER, Christian, 81476 München (DE)
(86) Internationale Anmeldenummer: PCT/EP2006/065030
(87) Internationale Veröffentlichungsnummer: WO 2007/017462

(56) Entgegenhaltungen:
- ACHARYA S ET AL: "PESO: Low overhead protection for ethernet over SONET transport" INFOCOM 2004. TWENTY-THIRD ANNUALJOINT CONFERENCE OF THE IEEE COMPUTER AND COMMUNICATIONS SOCIETIES HONG KONG, PR CHINA 7-11 MARCH 2004, PISCATAWAY, NJ, USA,IEEE, Bd. 1, 7. März 2004 (2004-03-07), Seiten 165-175, XP010740800 ISBN: 0-7803-8355-9
- ANONYMOUS: "Link capacity adjustment scheme (LCAS) for virtual concatenated signals" INTERNATIONAL TELECOMMUNICATION UNION. GENEVA, CH, Februar 2004 (2004-02), XP017400828 in der Anmeldung erwähnt

## Beschreibung

Die Erfindung betrifft ein Verfahren zur Übertragung von Daten nach dem Oberbegriff des Patentanspruchs 1 und ein Netzelement für ein Datennetz.

Zur Übertragung von Daten werden Datennetze eingesetzt wie beispielsweise Netze der synchronen Digitalhierarchie, kurz SDH, oder synchrone optische Netze, kurz SONET. Durch diese Netze werden Daten mittels virtueller Container / virtual container, kurz VC, übertragen. Dazu werden die Daten sendeseitig in virtuelle Container eingefügt. Die virtuellen Container bestehen im Wesentlichen aus einem Teil für Nutzdaten und einem Teil für Overheaddaten, die zur Steuerung, Verwaltung, Administration usw. des Netzes bzw. der Container eingesetzt werden. Virtuelle Container können miteinander zu concatenated virtual container bzw. verknüpften virtuellen Containern verbunden werden. Diese werden auch als virtuell verknüpften Teilsignale bezeichnet. Mehrere solcher virtual container oder concatenated virtual container können zu einer virtual concatenated group zusammengefasst werden, beispielsweise mit dem Link Capacity Adjustment Scheme, kurz LCAS, gemäß dem Standard ITU-T G.7042. Dabei können unterschiedliche concatenated virtual container einer virtual concatenated group über unterschiedliche Übertragungsabschnitte bzw. - wege, Pfade oder Links des Datennetzes übertragen werden. Das Einfügen bzw. Entnehmen der (Nutz-)Daten erfolgt in Netzelementen des Datennetzes, die wiederum durch verschiedene Übertragungswege miteinander verbunden sind.

Mit dem LCAS Verfahren können Daten in eine virtual concatenated group eingefügt werden. Die Übertragung der Daten einer virtual concatenated group erfolgt mittels (concatenated) virtual container, wobei diese von der Quelle über verschiedene Übertragungsabschnitte zu einer Senke / einem Ziel übertragen werden. Dies wird als so genanntes diverse routing bezeichnet. Beispielsweise erfolgt die Übertragung einer ersten Gruppe von virtual containern einer virtual concatenated group über eine ersten Übertragungsstrecke und eine zweite Gruppe von containern der virtuell concatenated group über eine zweite Übertragungsstrecke. Fällt in einem Störungsfall die erste Übertragungsstrecke aus, so wird mit LCAS die Bandbreite der virtual concatenated group um den Anteil der über die ausgefallene Strecke geführten Teile verringert. Das heißt, die Verbindung bleibt erhalten aber die Bandbreite verringert sich.

Bei Diensten, die eine stabile Bandbreite benötigen oder garantieren, kann diese Vorgangsweise zu nicht akzeptierbaren Qualitätsverlusten führen.

Dokument "PESO: Low Overhead Protection for Ethernet over SONET Transport" Acharya S. et al., offenbart ein LCAS-System, wobei sendeseitig die virtual concatenated group in eine erste und eine zweite virtual concatenated group aufgeteilt wird.

Aufgabe der vorliegenden Erfindung ist es, die Übertragung von Daten über ein Datennetz zu verbessern.

Diese Aufgabe wird durch ein Verfahren mit den Merkmalen des Patentanspruchs 1 sowie durch ein Netzelement mit den Merkmalen des Patentanspruchs 7 gelöst.

Der Vorteil der Erfindung besteht darin, dass durch die Aufteilung einer virtual concatenated group in zwei unter oder sub virtual concatenated groups (erste und zweite virtual concatenated group) eine flexiblere Nutzung und eine bessere Ausnutzung der Übertragungskapazität ermöglicht wird.

Vorteilhafte Ausgestaltungen der Erfindung sind in den Unteransprüchen angegeben.

In einer vorteilhaften Ausgestaltung der Erfindung werden in der ersten virtual concatenated group Daten erster Art von einem ersten Datensignal und in der zweiten virtual concatenated group Daten zweiter Art von einem zweiten Datensignal übertragen. Dies haut den Vorteil, dass durch eine virtual concatenated group zwei Datensignale respektive Client-Signale übertragen werden.

In einer weiteren vorteilhaften Ausgestaltung der Erfindung werden mit der ersten virtual concatenated group Daten höherer Priorität und mit der zweiten virtual concatenated group Daten niederer Priorität übertragen. Dies hat den besonderen Vorteil, dass bei Übertragung der virtual concatenated group über unterschiedliche Übertragungswege oder -Strecken und bei Ausfall einer Strecke die Übertragungskapazität der verbleibenden Strecke für die Übertragung von Daten höherer Priorität ausschließlich oder zumindest teilweise verwendet werden kann.

Ein Ausführungsbeispiel der Erfindung wird im Folgenden unter Bezugnahme auf eine Zeichnung näher erläutert. Dabei zeigt:
Figur 1 ein Schema einer Datenübertragung
Figur 2 ein zweites Schema einer Datenübertragung im Fehlerfall.

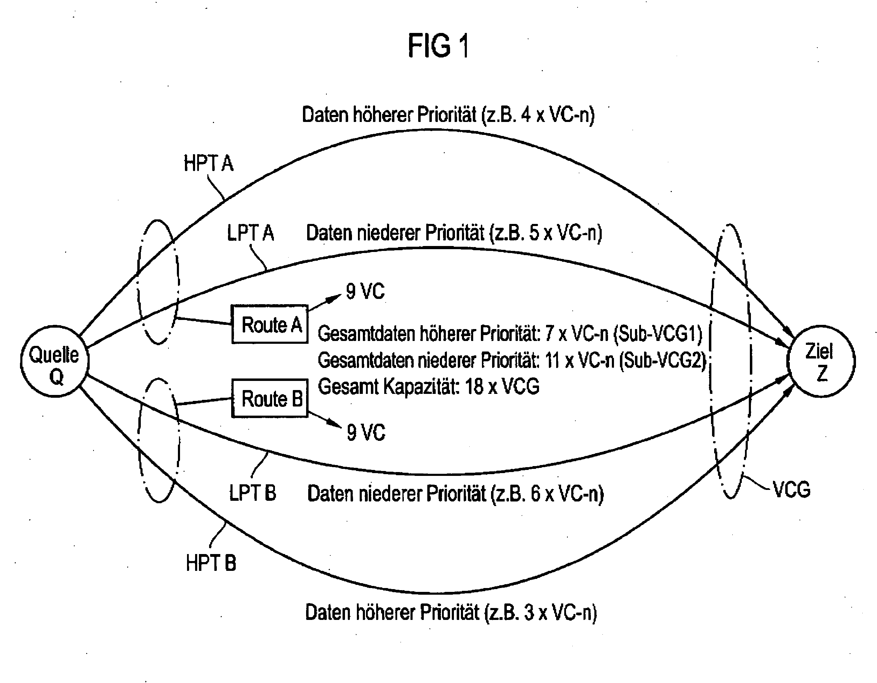

Figur 1 zeigt eine Darstellung zur Erläuterung des Prinzips der Übertragung mittels des erfindungsgemäßen Verfahrens. Daten einer Quelle Q sollen zu einer Senke oder zu einem Ziel übertragen werden. Quelle Q und Senke Z sind dabei ein Netzelement eines Daten- oder Kommunikationsnetzes. Das Netzelement der Quelle Q und das Netzelement der Senke Z sind mittels zwei unterschiedlicher Übertragungsstrecken, Übertragungswege, Pfade, Routen oder Links miteinander verbunden, die Teil eines Datennetzes sein können, das weitere Netzelemente enthält. D.h. die Übertragungsstrecken können weitere, nicht dargestellte Netzelemente enthalten. Im vorliegen Fall ist die Quelle Q einerseits durch Übertragungsstrecke oder Route A und andererseits durch Übertragungsstrecke oder Route B mit der Senke Z verbunden.

Prinzipiell werden die Daten sendeseitig in der Quelle Q in eine virtual concatenated group VCG, im Beispiel bestehend aus 18 virtuellen Containern, eingefügt. Die Hälfte der virtuellen Container der virtual concatenated group VCG, also 9 virtuelle Container, werden über Übertragungstrecke bzw. Route A und die andere Hälfte über Übertragungstrecke bzw. Route B übertragen.

Erfindungsgemäß wird die virtual concatenated group VCG in erste virtual concatenated group und eine zweite virtual concatenated group aufgeteilt. Im Beispiel gemäß Figur 1 besteht die erste virtual concatenated group oder Gruppe aus 7 virtual container und die zweite Gruppe aus 11 virtuellen Containern, wobei die erste Gruppe für Daten höherer Priorität - high priority traffic - und die zweite Gruppe für Daten niederer Priorität - low priority traffic - vorgesehen ist. In analoger Weise können die Gruppen auch für unterschiedliche Daten- oder Client-Signale vorgesehen werden.

Des weiteren wird ein erster Teil der virtual concatenated group oder Gruppe über einen ersten Übertragungsweg - Route A und ein zweiter Teil der virtual concatenated group oder Gruppe über einen zweiten Übertragungsweg - Route B übertragen. Im Beispiel wird ein erster Teil der virtual container der ersten virtual concatenated group über den ersten Übertragungsweg Route A und ein zweiter Teil der virtual container der ersten virtual concatenated group über den zweiten Übertragungsweg Route B übertragen. Im vorliegenden Fall werden 4 virtual container der ersten virtual concatenated group, die aus 7 virtuellen Containern besteht, über den ersten Übertragungsweg Route A übertragen, was als HPT A in Figur 1 eingetragen ist, und 3 virtual container der ersten virtual concatenated group über den zweiten Übertragungsweg Route B, was als HPT B in Figur 1 eingetragen ist, übertragen.

In analoger Weise wird ein erster Teil der zweiten virtual concatenated group über den ersten Übertragungsweg - Route A und ein zweiter Teil der zweiten virtual concatenated group über den zweiten Übertragungsweg - Route B übertragen. Im Beispiel werden 5 virtual container der zweiten virtual concatenated group, die aus 11 virtuellen Containern besteht, über den ersten Übertragungsweg Route A übertragen, welches in Figur 1 als LPT A eingetragen ist, und 6 virtual container der zweiten virtual concatenated group über den zweiten Übertragungsweg Route B, was in Figur 1 als LPT B eingetragen ist, übertragen.

Dass heißt, die virtual concatenated group besteht aus 18 virtuellen Containern, die in eine erste Gruppe aus 7 virtuellen Containern und zweite Gruppe aus 11 virtuellen Containern besteht, wobei 4 virtuelle Container der ersten Gruppe über Route A und 3 virtuelle Container der ersten Gruppe über Route B übertragen werden sowie 5 virtuelle Container der zweiten Gruppe über Route A und 6 virtuelle Container der zweiten Gruppe über Route B übertragen werden, so dass jeweils 9 virtuelle Container über Route A (4+5=9) und Route B (3+6=9) übertragen werden.

Vorliegend werden Daten höherer Priorität der Quelle Q durch diese in die erste virtual concatenated group und Daten niederer Priorität durch das Netzelement der Quelle Q in die zweite virtual concatenated group eingefügt und entsprechend der beschriebenen oder einer anderen Aufteilung zur Senke Z übertragen. Dies kann durch einen Prozess erfolgen, der über die Zuordnung von Daten zu high- bzw. low-priority traffic entscheidet.

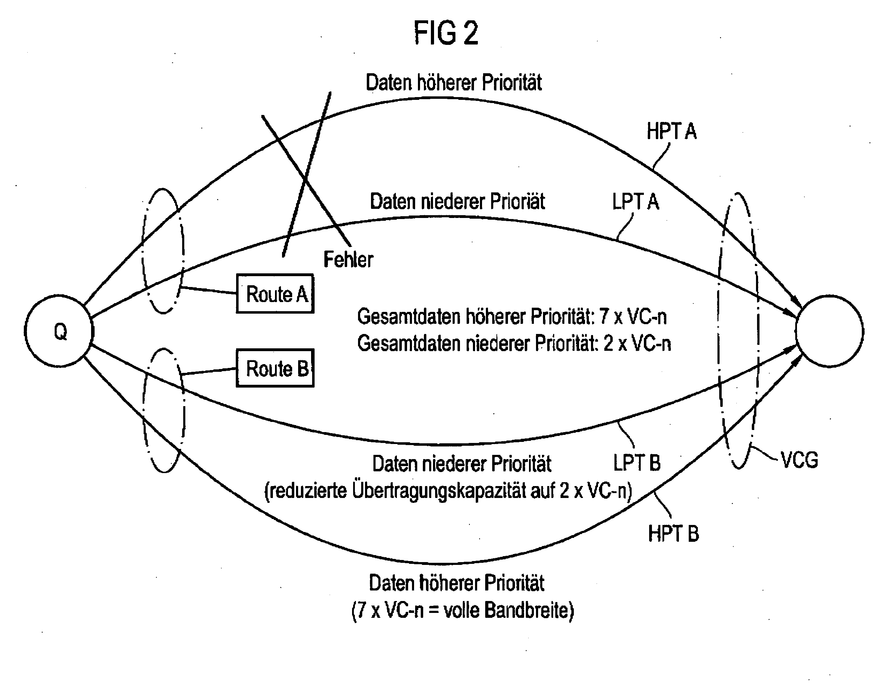

Figur 2 zeigt eine Abbildung gemäß Figur 1, mit dem Unterschied, dass Übertragungstrecke Route A einen Störungsfall aufweist bzw. unterbrochen ist. In diesem Fall wird in der Quelle Q der Fehler detektiert und eine Neuaufteilung der Daten bzw. des Traffics durchgeführt. Dies wird beispielsweise durch LCAS vorgenommen. Dabei werden über den verbliebenen Übertragungsweg, im Beispiel Route B, vorrangig Daten der ersten virtual concatenated group, im Beispiel mit Daten höherer Priorität bzw. high priority traffic, übertragen.

Im vorliegen Fall besteht die erste virtual concatenated group aus 7 virtuellen containern. In der Folge wird eine Neuaufteilung dahingehend vorgenommen, dass die 7 virtuellen Container der ersten Gruppe über den Übertragungsweg Route B übertragen werden und die verbleibende Übertragungskapazität - sofern vorhanden -, im Beispiel 2 virtuelle Container, für die Übertragung der Daten der zweiten Gruppe verwendet wird. Es erfolgt im Beispiel ein Downgrad für die zweite Gruppe und es werden 2 virtuelle Container mit der Daten der zweiten Gruppe bzw. low priority traffic über den Übertragungsweg Route B übertragen. D.h. die Verbindung für den low priority traffic bleibt bestehen, ist allerdings in der Übertragungskapazität stark reduziert.

Im Folgenden wird weiter auf die Erfindung eingegangen. Eine virtual concatenated group VCG wird in eine erste "unter" oder "sub" virtual concatenated group, welche beispielsweise Daten höherer Priorität übertragen soll und eine zweite "unter" oder "sub" virtual concatenated group, die beispielsweise Daten niederer Priorität übertragen soll, aufgeteilt. In jede dieser unter virtual concatenated groups wird ein getrenntes Datensignal respektive Client-Signal eingefügt bzw. eingespeist, so dass nun über beide unter virtual concatenated group unabhängige bzw. getrennte Daten bzw. Client-Signale übertragen werden. Zur Kennzeichnung dieser getrennten unter virtual concatenated groups wird beispielsweise das LCAS-Protokoll um Kontrollwörter erweitert, die eine Steuerung und Kennzeichnung der unter virtual concatenated group bzw. der zugehörigen Übertragungsstrecken ermöglicht. Hierbei wird beispielsweise das CTRL-Feld des LCAS-Protokolls verwendet werden. Die Zuordnung der Strecken und Daten niederer Priorität sowie der Strecken und Daten höherer Priorität erfolgt bei der Einbindung in dieselbe virtual concatenated group bzw. virtuell konkatenierte Gruppe VCG, wobei ein vorgeschalteter Prozess über die Zuordnung der Daten zu high priority und low priority traffic entscheidet.

Das CTRL-Feld des LCAS-Protokolls besteht aus vier Bit. Die vier Bit ermöglichen 16 Kontrollwörter, von denen in der ITU-T G.7042/Y.1305 (Stand 02/2004) sechs Wörter definiert bzw. verwendet werden. Bestandteil der Erfindung ist auch die Erweiterung des Kontrollwortschatzes um die benötigten Befehle. Nachfolgend wird beispielhaft eine solche Erweiterung dargestellt. In der nachfolgenden Tabelle ist in der ersten Spalte das 4 Bit umfassende CTRL-Feld des LCAS-Protkolls dargestellt, in der zweiten Spalte sind zu den daraus möglichen Kontrollwörtern die bisher definierten Befehle aufgeführt und in der dritten Spalte sind neue Befehle für das erfindungsgemäße Verfahren aufgeführt.

| Value msb...lsb | Command LCAS | Command LCAS/low |
|---|---|---|
| 0000 | FIXED | FIXED |
| 0001 | ADD | ADD(-LP) |
| 0010 | NORM | NORM (-LP) |
| 0011 | EOS | EOS(-LP) |
| 0100 | Not used | Not used |
| 0101 | IDLE | IDLE |
| 0110 | Not used | Not used |
| 0111 | Not used | Not used |
| 1000 | Not used | Not used |
| 10.01 | Not used | ADD-HP |
| 1010 | Not used | NORM-HP |
| 1011 | Not used | EOS-HP |
| 1100 | Not used | Not used |
| 1101 | Not used | Not used |
| 1110 | Not used | Not used |
| 1111 | DNU | DNU |

Ein Teil der ursprünglichen Befehle, in der Tabelle die Codewörter mit den Binärwerten 0001, 0010 und 0110, werden mit der gleichen Bedeutung weiter benutzt. Die neuen Befehle sind in Zeile 9, 10 und 11 der Tabelle eingefügt, d. h. die Codewörter 1001, 1010 und 1011 werden als neue Befehle definiert. Zur Vereinfachung der Implementierung ist das Bitmuster dieser drei neuen Befehle so gewählt, dass sie bis auf das MSB mit den "low priority" Befehlen identisch sind.

Werden ausschließlich mit ADD(-LP) Teilkanäle eingerichtet, verhalten sich diese im Falle eines Streckenausfalls exakt gemäß der Norm ITU-T G.7042. Dies sichert die Zusammenarbeit mit existierenden LCAS-Systemen bzw. Bausteinen. Werden sowohl mit ADD(-LP) als auch mit ADD-HP Kanäle eingerichtet, werden im Falle eines Streckenausfalls die noch zur Verfügung stehenden Kanäle niedriger Priorität mit den Kanälen höherer Priorität überschrieben, d. h. es werden die Daten in den Kanälen niedriger Priorität zumindest zum Teil verworfen, um in den frei gewordenen virtuellen Containern Daten mit höherer Priorität zu übertragen. Die Reihenfolge des Überschreibens ergibt sich aus der Nummerierung der Kanäle.

Anhand dessen ist der Umschaltvorgang gemäß Figur 1 und Figur 2 für die bereits beschriebene Konfiguration (Übertragungstrecke Route A hat vier virtuelle Container für höher priorisierte und fünf virtuelle Container für niedriger priorisierte Übertragung konfiguriert und aktiv geschalten. Übertragungstrecke Route B hat drei virtuelle Container für höher priorisierte und sechs virtuelle Container für niedriger priorisierte Übertragung konfiguriert und aktiv geschalten. Die Gesamtgröße der virtuell konkatinierten Gruppen sind 18 virtuelle Container. Die Größe der höher priorisierten ersten virtual concatenated group ist 7 virtuelle Container, die Größe der niedriger priorisierten zweiten virtual concatenated group ist 11 virtuelle Container.) wie folgt:

Im Kontrollfeld des LCAS-Protokolls für die beiden Übertragungswege / Routen werden beispielhaft im jeweiligen virtuellen Container die folgenden Werte übertragen.

| Nummer des VC | CTRL |
|---|---|
| N1 | NORM-HP |
| N2 | NORM-HP |
| N3 | NORM-HP |
| N4 | NORM-HP |
| N5 | NORM(-LP) |
| N6 | NORM(-LP) |
| N7 | NORM(-LP) |
| N8 | NORM(-LP) |
| N9 | NORM(-LP) |

| Nummer des VC | CTRL |
|---|---|
| N10 | NORM-HP |
| N11 | NORM-HP |
| N12 | EOS-HP |
| N13 | NORM(-LP) |
| N14 | NORM(-LP) |
| N15 | NORM(-LP) |
| N16 | NORM(-LP) |
| N17 | NORM(-LP) |
| N18 | EOS(-LP) |

Fällt Übertragungsweg Route A aus, wird über Übertragungsweg Route B im LCAS-Protokoll (MST-Feld) der Ausfall der virtuellen Container des Übertragungsweges Route A gemeldet. Als Konsequenz werden alle virtuellen Container der Route A auf DNU (do not use) gesetzt. Zusätzlich wird von Route B die für den Erhalt der höher priorisierten Bandbreite benötigte Anzahl von niedriger priorisierten virtuellen Container auf ADD-HP gesetzt. Dies geschieht beginnend vom virtuellen Container mit der niedrigsten Nummer. Der virtuelle Container mit dem CTRL-Feldeintrag CTRL=EOS(-LP) wird als letzter entfernt. Der Zwischenzustand ist wie folgt:

| Nummer des VC | CTRL |
|---|---|
| N1 | DNU |
| N2 | DNU |
| N3 | DNU |
| N4 | DNU |
| N5 | DNU |
| N6 | DNU |
| N7 | DNU |
| N8 | DNU |
| N9 | DNU |

| Nummer des VC | CTRL |
|---|---|
| N10 | NORM-HP |
| N11 | NORM-HP |
| N12 | EOS-HP |
| N13 | ADD-HP |
| N14 | ADD-HP |
| N15 | ADD-HP |
| N16 | ADD-HP |
| N17 | NORM(-LP) |
| N18 | EOS (-LP) |

Die Senke / das Ziel Z bestätigt die Verringerung der Übertragungsbandbreite für die niedriger priorisierte Übertragung und die Bereitschaft zur Übernahme der höher priorisierten Übertragung in dem mit ADD-HP markierten virtuellen Container, dem LCAS-Protokoll entsprechend mit MST=OK für die entsprechenden virtuellen Container. Daraufhin sendet die Quelle / Source NORM-HP und EOS-HP für die entsprechenden virtuellen Container nach den Vorgaben von ITU-T G.7042. Der Endzustand ist wie folgt:

| Nummer des VC | CTRL |
|---|---|
| N1 | DNU |
| N2 | DNU |
| N3 | DNU |
| N4 | DNU |
| N5 | DNU |
| N6 | DNU |
| N7 | DNU |
| N 8 | DNU |
| N9 | DNU |

| Nummer des VC | CTRL |
|---|---|
| N10 | NORM-HP |
| N11 | NORM-HP |
| N12 | NORM-HP |
| N13 | NORM-HP |
| N14 | NORM-HP |
| N15 | NORM-HP |
| N16 | EOS-HP |
| N17 | NORM(-LP) |
| N18 | EOS(-LP) |

Insgesamt stehen also 9 virtuelle Container zur Datenübertragung zur Verfügung. Davon werden 7 für die höher priorisierte Übertragung mittels der ersten Gruppe benutzt und zwei virtuelle Container für die niedriger priorisierte-zweite Gruppe benutzt.

Für die Wiederherstellung bzw. Restaurierung der zuvor ausgefallenen Übertragungskanäle gibt es prinzipiell zwei Möglichkeiten. Die erste Möglichkeit "Revertive" respektive zurückkehrend und die zweite Möglichkeit "non Revertive" respektive nicht zurückkehrend. Im Fall von "non Revertive" wird auch nach einer erneuten Verfügbarkeit der Übertragungsstrecken bzw. -kanäle bzw. einer erfolgten Reparatur von Route A nicht auf die ursprünglichen Übertragungswege, d. h. auf Route A zurück geschalten, sondern nur bei Ausfall der noch aktiven Übertragungsstrecke bzw. -wege, im Beispiel Route B . Im Fall von Revertive werden die ursprünglichen virtuellen Container durch die dem Standard-LCAS-Protokoll entsprechenden Übergänge von DNU nach NORM-(HP/LP) wieder für die Übertragung freigegeben. Die Signalisierung für die übrigen Übertragungskanäle wird entsprechend angepasst. Im obigen Beispiel wäre damit der Ausgangszustand wieder erreicht.

Durch nachgelagerte Anwendung von GFP Subchanneling gemäß ITU-.T G.7041 und durch Erweiterung des virtuell concatenated group-Vielfachrahmenprotokolls kann das Verfahren auf mehr als zwei Unterkanälen erweitert werden.

Zusammenfassend sollen nochmals Vorteile der Erfindung genannt werden.
Die zur Verfügung stehende gesamte physikalische Bandbreite kann mit Hilfe des erfindungsgemäßen Verfahrens ständig genutzt werden. Insbesondere müssen keine nicht genutzten Übertragungsstrecken für Streckenschutzschaltungen vorgehalten werden.
Die Übertragung für Anwendungen, welche eine stabile Bandbreite benötigen, wird vollständig geschützt. Die Bandbreite bleibt auch im Fehlerfall erhalten. Low priority Datenverkehr wird dann verworfen.
Die Übertragungsstrecken können so konfiguriert werden, dass Daten niedriger Priorität nie vollständig verworfen werden müssen, so dass auch im Störungsfall eine minimale Bandbreite für Daten niedriger Priorität zur Verfügung steht.
Das Schalten erfolgt autonom an den Endstellen der Übertragung bzw. in den terminierenden Netzelementen, was eine hohe Umschaltgeschwindigkeit zur Folge hat.
Das erfindungsgemäße Verfahren arbeitet mit existierenden Verfahren / Methoden von LCAS zusammen.
Das erfindungsgemäße Verfahren ist auch für mehr als zwei Gruppen bzw. Unterkanäle geeignet, z. B. durch Generic Frame Procedure, kurz GFP, Subchanneling nach ITU-T G.7041 oder durch Erweiterung des Vielfachrahmensprotokolls für virtuelle Konkatenierung ITU-T G.707.

## Patentansprüche

1. Verfahren zur Übertragung von Daten in einem Datennetz mittels virtual container, die mittels des Link Capacity Adjustment Scheme, LCAS, zu einer virtual concatenated group zusammengefasst werden,
wobei sendeseitig die virtual concatenated group in eine erste virtual concatenated group und eine zweite virtual concatenated group aufgeteilt wird,
**dadurch gekennzeichnet,**
**dass** sendeseitig zu übertragende Daten (Source Q) erster Art (HPT A, HPT B)in die erste virtual concatenated group und sendeseitig zu übertragende Daten zweiter Art in die zweite virtual concatenated group (LPT A, LPT B) eingefügt werden und im Datennetz übertragen werden.

2. Verfahren nach Anspruch 1,
**dadurch gekennzeichnet,**
**dass** die Daten erster Art von einem ersten Datensignal und die Daten zweiter Art von einem zweiten Datensignal stammen, so dass durch eine virtual concatenated group zwei Datensignale respektive Client-Signale übertragen werden.

3. Verfahren nach Anspruch 1 oder 2,
**dadurch gekennzeichnet,**
**dass** mit der ersten virtual concatenated group Daten höherer Priorität und mit der zweiten virtual concatenated group Daten niederer Priorität übertragen werden.

4. Verfahren nach Anspruch 1, 2 oder 3,
**dadurch gekennzeichnet,**
**dass** ein erster Teil der virtual concatenated group über einen ersten Übertragungsweg und ein zweiter Teil der virtual concatenated group über einen zweiten Übertragungsweg übertragen wird und
im Störungsfall eines Übertragungsweges über den verbliebenen Übertragungsweg vorrangig Daten der ersten virtual concatenated group übertragen werden.

5. Verfahren nach Anspruch 1, 2, 3 oder 4,
**dadurch gekennzeichnet,**
**dass** die erste und zweite virtual concatenated group durch einen Eintrag in einem zum LCAS-Protokoll gehörenden Feld **gekennzeichnet** wird.

6. Verfahren nach Anspruch 5,
**dadurch gekennzeichnet,**
**dass** die erste und zweite virtual concatenated group durch einen Eintrag im CTRL-Feld des LCAS-Protokolls **gekennzeichnet** wird.

7. Netzelement für ein Datennetz umfassend Mittel zur Durchführung des Verfahrens nach einem der vorhergehenden Ansprüche 1 bis 6.

## Claims

1. Method for transmitting data in a data network using virtual containers which are combined using the Link Capacity Adjustment Scheme, LCAS, to form a virtual concatenated group, the transmission end splitting the virtual concatenated group into a first virtual concatenated group and a second virtual concatenated group,
**characterized**
**in that** data (Source Q) of a first type (HPT A, HPT B) to be transmitted at the transmission end are inserted into the first virtual concatenated group and data of a second type to be transmitted at the transmission end are inserted into the second virtual concatenated group (LPT A, LPT B) and are transmitted in the data network.

2. Method according to Claim 1,
**characterized**
**in that** the data of a first type come from a first data signal and the data of a second type come from a second data signal, so that a virtual concatenated group transmits two data signals or client signals.

3. Method according to Claim 1 or 2,
**characterized**
**in that** the first virtual concatenated group is used to transmit higher priority data and the second virtual concatenated group is used to transmit low priority data.

4. Method according to Claim 1, 2 or 3,
**characterized**
**in that** a first portion of the virtual concatenated group is transmitted via a first transmission path and a second portion of the virtual concatenated group is transmitted via a second transmission path, and in the event of a fault on a transmission path the remaining transmission path is used to transmit primarily data from the first virtual concatenated group.

5. Method according to Claim 1, 2, 3 or 4,
**characterized**
**in that** the first and second virtual concatenated groups are identified by an entry in a field associated with the LCAS protocol.

6. Method according to Claim 5,
**characterized**
**in that** the first and second virtual concatenated groups are identified by an entry in the CTRL field of the LCAS protocol.

7. Network element for a data network comprising means for carrying out the method according to one of the preceding Claims 1 to 6.

## Revendications

1. Procédé pour transmettre des données dans un réseau de données au moyen de conteneurs virtuels qui sont regroupés en un groupe concaténé virtuel au moyen du Link Capacity Adjustment Scheme (LCAS),
le groupe concaténé virtuel étant, côté émetteur, réparti en un premier groupe concaténé virtuel et en un deuxième groupe concaténé virtuel,
**caractérisé en ce que**
des données (Source Q) d'un premier type (HPT A, HPT B) à transmettre côté émetteur sont insérées dans le premier groupe concaténé virtuel et des données d'un deuxième type à transmettre côté émetteur sont insérées dans le deuxième groupe concaténé virtuel (LPT A, LPT B), et sont transmises dans le réseau de données.

2. Procédé selon la revendication 1,
**caractérisé en ce que**
les données du premier type proviennent d'un premier signal de données et les données du deuxième type proviennent d'un deuxième signal de données de sorte que deux signaux de données resp. signaux clients sont transmis par un groupe concaténé virtuel.

3. Procédé selon la revendication 1 ou 2,
**caractérisé en ce que**
sont transmises avec le premier groupe concaténé virtuel des données de priorité supérieure et, avec le deuxième groupe concaténé virtuel, des données de priorité inférieure.

4. Procédé selon la revendication 1, 2 ou 3,
**caractérisé en ce que**
une première partie du groupe concaténé virtuel est transmise sur une première voie de transmission et une deuxième partie du groupe concaténé virtuel est transmise sur une deuxième voie de transmission et
en cas de perturbation sur une voie de transmission sont prioritairement transmises, sur la voie de transmission restante, des données du premier groupe concaténé virtuel.

5. Procédé selon la revendication 1, 2, 3 ou 4,
**caractérisé en ce que**
les premier et deuxième groupes concaténés virtuels sont marqués par une entrée dans un champ qui fait partie du protocole LCAS.

6. Procédé selon la revendication 5,
**caractérisé en ce que**
les premier et deuxième groupes concaténés virtuels sont marqués par une entrée dans le champ CTRL du protocole LCAS.

7. Élément de réseau pour un réseau de données, comprenant des moyens permettant d'exécuter le procédé selon l'une des revendications précédentes 1 à 6.
